Europäisches Patentamt

European Patent Office

Office européen des brevets

(19)

(11) Numéro de publication: **0 254 650**
**A1**

## (12) DEMANDE DE BREVET EUROPEEN

(21) Numéro de dépôt: 87420176.7

(22) Date de dépôt: 25.06.87

(51) Int. Cl.⁴: **F 16 J 1/14**
F 16 C 11/04, F 04 B 9/14

(30) Priorité: 26.06.86 FR 8609483

(43) Date de publication de la demande:
**27.01.88 Bulletin 88/04**

(84) Etats contractants désignés:
**AT BE CH DE ES FR GB GR IT LI LU NL SE**

(71) Demandeur: "BERTHOUD S.A."
F-69220 Belleville sur Saône (FR)

(72) Inventeur: **Nissels, Robert**
**Vallières**
**F-69830 Saint Georges de Reneins (FR)**

(74) Mandataire: **Karmin, Roger et al**
**Cabinet MONNIER 150, cours Lafayette**
**F-69003 Lyon (FR)**

(54) **Embiellage destiné au déplacement alternatif d'un piston dans un cylindre.**

(57) Le pied de sa bielle (3) compoprte une zone de moindre épaisseur (5) constituant une charnière permettant un changement d'orientation de ce pied par rapport au corps de la bielle suivant la positlon du piston (1) le long de sa course, tandis que la tête (3a) de ladite bielle (3) est de forme arrondie afin de porter pendant la course active de la bielle (3) contre une partie concave complémentaire (12) d'un levier d'actionnement (8) destiné au déplacement en va-et-vient de cette bielle (3), des moyens (7) assurant la coopération de la bielle (3) et du levier (8) pendant la course retour dudit piston (1).

Fig. 1

EP 0 254 650 A1

## Description

La présente invention est relative à des perfectionnements apportés aux embiellages plus particulièrement, bien que non exclusivement destinés au déplacement du piston dans le cylindre d'une pompe aspirante et refoulante utilisée par exemple dans un pulvérisateur.

Un embiellage usuel est réalisé au moyen d'une bielle articulée par son pied au piston et par sa tête à un vilebrequin ou à un levier basculant.

On comprend aisément qu'un tel montage soit onéreux du fait des opérations d'usinage nécessaires à la constitution des articulations précitées. Or, dans un appareil du genre de celui évoqué ci-dessus, un tel embiellage présente deux inconvénients principaux. Tout d'abord, les articulations usuelles sont d'un coût élevé non compatible avec le prix de revient d'un tel appareil qui doit être bon marché. Ensuite, elles risquent de subir des corrosions susceptibles de les endommager de la part des produits phytosanitaires qui sont généralement très actifs et détruisent les graisses de lubrification.

Les perfectionnements qui font l'objet de la présente invention visent à permettre la réalisation d'un embiellage bon marché et qui ne soit pas susceptible d'être corrodé.

A cet effet, la bielle du système suivant l'invention comporte au niveau de son pied une zone de moindre épaisseur constituant une charnière permettant un changement d'orientation dudit pied par rapport au piston auquel la bielle est associée suivant la position de celui-ci le long de sa course. La tête de la bielle suivant l'invention est de forme arrondie afin de porter contre une partie concave complémentaire d'un levier d'actionnement destiné au déplacement de la bielle lors de la course active du piston. Des bossages assurent la coopération de la bielle et du levier pendant la course de retour du piston.

Suivant un mode de réalisation préféré de la disposition qui précède, les bossages s'engagent dans des ouvertures du levier par réduction élastique de l'épaisseur de la bielle. Les choses sont arrangées de telle manière que les bossages ne portent pas contre le fond des ouvertures dans lesquelles ils sont engagés lorsque la tête de bielle porte contre la partie arrondie concave complémentaire du levier d'actionnement. Le faible jeu permet d'éviter une fatigue des bossages par cisaillement.

La bielle peut être réalisée par moulage d'une seule pièce avec le piston ou être assemblée à celui-ci par tous moyens appropriés.

Le dessin annexé, donné à titre d'exemple, permettra de mieux comprendre l'invention, les caractéristiques qu'elle présente et les avantages qu'elle est susceptible de procurer :

Fig. 1 est une vue en perspective montrant les différents éléments d'un embiellage exécuté conformément à l'invention.

Fig. 2 et 3 illustrent en coupe verticale, respectivement durant la course active et la course de retour de la bielle, la manière dont la tête de celle-ci coopère avec le levier d'actionnement.

Fig. 4 et 5 montrent en vue par côté l'embiellage suivant l'invention pendant la course acrive (flèche F₁) et celle de retour (flèche F₂) du piston à proximité des points morts haut et bas du piston.

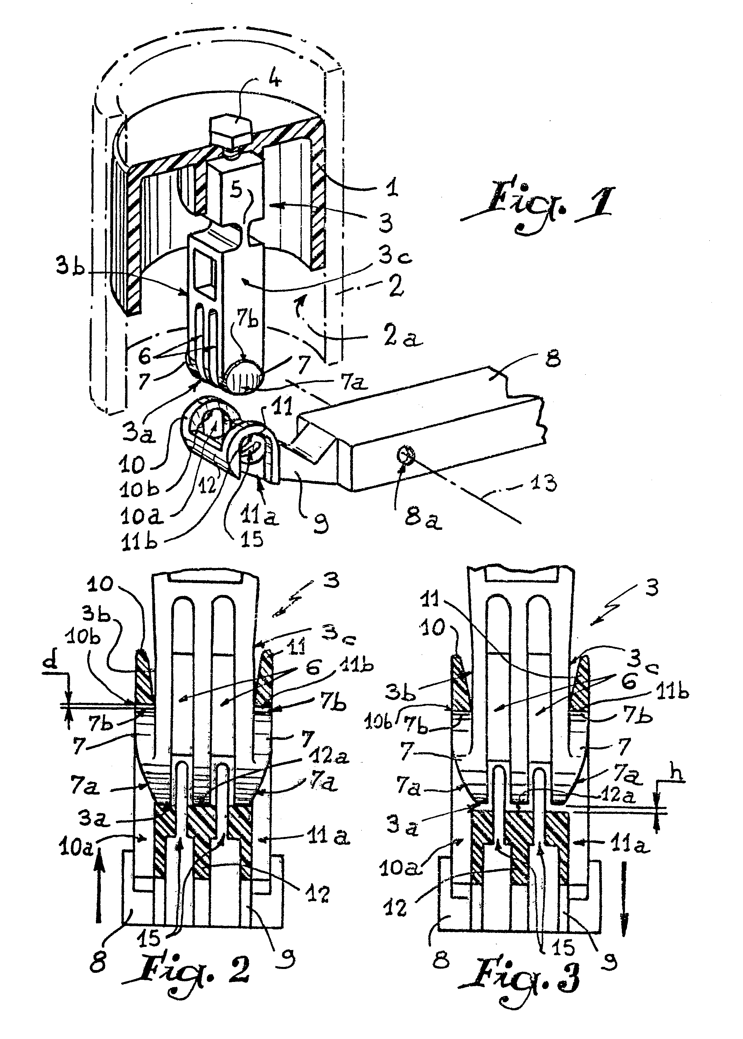

On a illustré en fig. 1 un piston 1 destiné à se déplacer dans l'alésage 2a d'un cylindre 2 illustré en traits mixtes. Le piston 1 est assemblé à l'une des extrémités de la bielle 3 par l'intermédiaire d'une vis 4.

La bielle 3 comporte au niveau de son pied, c'est-à-dire de son extrémité assemblée au piston et en deça de cet assemblage, une zone de moindre épaisseur 5 constituant une espèce de charnière permettant un changement d'orientation du pied de la bielle par rapport à son corps, tout en permettant de transmettre une force axiale sans flambage. Bien entendu, la bielle est réalisée en une matière telle qu'une matière plastique présentant une certaine élasticité. On pourrait évidemment admettre que le piston 1 et la bielle 3 soient réalisés en une seule et même pièce.

Le corps de la bielle 3 comprend deux saignées longitudinales 6 débouchant sur sa tête et qui permettent de réduire élastiquement son épaisseur en rapprochant les différentes lamelles que déterminent les deux saignées en question. La partie inférieure ou tête de la bielle 3 présente une extrémité 3a arrondie et les deux faces latérales opposées 3b, 3c de cette bielle comportent chacune un bossage 7 qui se dresse perpendiculairement à la face considérée.

La bielle 3 est destinée à coopérer avec un levier d'actionnement 8 dont l'extrémité se prolonge par une patte 9 se terminant par deux joues 10, 11 réunies par une cloison concave en direction du haut référencée 12 et présentant une forme arrondie complémentaire à celle de l'extrémité inférieure 3a de la tête de la bielle 3. On observe que chacune des joues 10, 11 est pourvue d'une ouverture 10a, 11a qui la traverse de part en part sauf au niveau de la cloison 12.

Le levier 8 comporte une perforation 8a que traverse un axe 13 destiné à faire coopérer avec une partie fixe 14 assujettie au cylindre 2 pour permettre le basculement du levier 8.

Pour assembler le levier 8 et la bielle 3, il suffit de comprimer celle-ci afin de diminuer l'épaisseur des saignées 6, de telle sorte que l'on puisse introduire la bielle entre les joues 10 et 11 du levier 8 en effaçant les bossages 7. Puis en descendant la bielle de manière plus profonde entre les deux joues, on arrive à placer lesdits bossages 7 en vis-à-vis des ouvertures 10a et 11a. Si l'on relâche alors la bielle, les bossages pénètrent élastiquement dans lesdites ouvertures pour assembler la bielle et le levier. Comme illustré en fig. 2, l'extrémité 3a de la bielle vient porter contre la face 12a tournée vers le haut de la cloison 12, tandis que les bossages 7 se trouvent à une très faible distance d du fond 10b, 11b des ouvertures 10a, 11a de chaque joue 10, 11. On observe qu'il existe dans la cloison 12 des lumières 15 la traversant de part en part et permettant l'évacuation de tout corps étranger pouvant se trouver entre elle et l'extrémité 3a de la bielle 3.

On notera que la face extérieure de chaque bossage 7 comporte un chanfrein arrondi 7a en pente vers l'extrémité de la bielle mais qui laisse entière la zone supérieure 7b de chaque bossage qui est destinée à venir en contact avec les fonds 10b, 11b des ouvertures 10a, 11a de chaque joue 10, 11 de la patte 9.

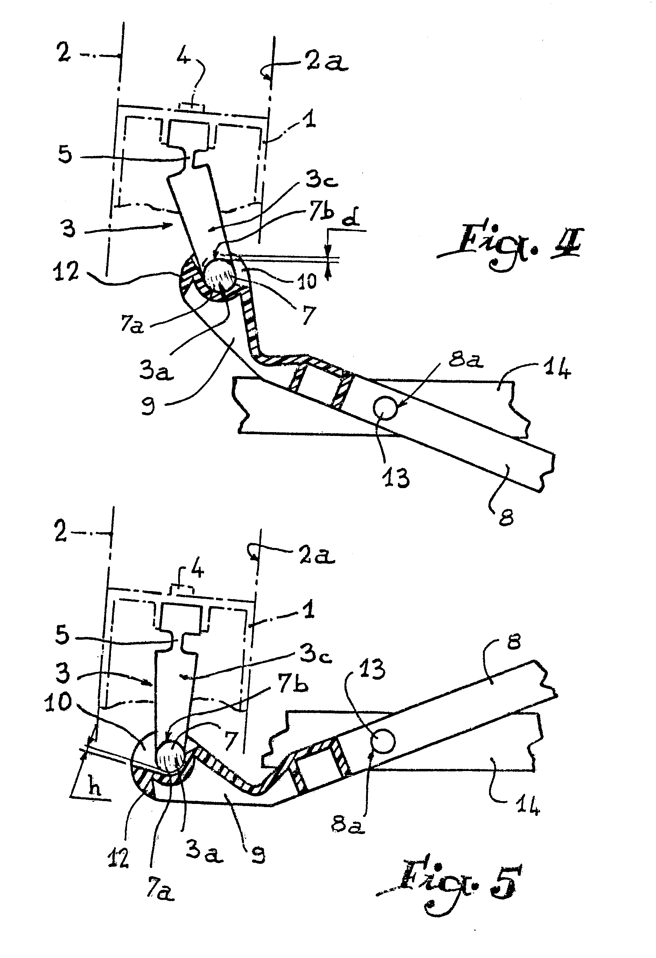

Cette disposition permet l'accouplement automatique de la patte et de la bielle une fois le cylindre mis en place. Il suffit en effet de manoeuvrer le levier dans le sens de l'élévation de la patte 9 pour que la bielle immobile en translation pénètre entre les joues 10, 11 prévues légèrement évasées vers le haut comme illustré en fig. 2 et 3. Cette pénétration provoque un resserrement de la bielle qui efface les bossages jusqu'à ce qu'ils arrivent en face des ouvertures 10a, 11a. A ce moment, ils ne sont plus comprimés par les joues et l'élasticité de la bielle les projettent dans lesdites ouvertures.

Il va de soi que le démontage s'effectue de manière inverse, c'est-à-dire en pinçant les bossages 7 entre le pouce et l'index afin de diminuer l'épaisseur de la bielle, puis en faisant descendre la patte 9 afin que lesdits bossages sortent des joues.

En fig. 3, on a illustré la bielle lors de sa course de descente. A ce moment ce sont les bossages 7 qui sont en appui contre les fonds 10b et 11b, tandis que l'extrémité 3a la tête 3a de la bielle se trouve à une hauteur h au-dessus de la face supérieure 12a de la cloison 12.

Ces deux positions sont également bien illustrées en fig. 4 et 5. On observe sur ces figures le changement de géométrie de la bielle. En fig. 4, la zone 5 est déformée, c'est-à-dire que le corps de bielle se trouve orienté obliquement par rapport à son pied. Au contraire, en fig. 5, la bielle n'est pas déformée et se trouve donc rectiligne.

## Revendications

1. Embiellage destiné au déplacement alternatif d'un piston (1) dans un cylindre (2), caractérisé en ce que le pied de sa bielle (3) comporte une zone de moindre épaisseur (5) constituant une charnière permettant un changement d'orientation de ce pied par rapport au corps de la bielle suivant la position du piston (1) le long de sa course, tandis que l'extrémité (3a) de la tête de ladite bielle (3) est de forme arrondie afin de porter pendant la course active de cette bielle contre une partie concave complémentaire (12) d'un levier d'actionnement (8) destiné au déplacement en va-et-vient de cette bielle (3), des moyens (7) assurant la coopération de la bielle (3) et du levier (8) pendant la course retour dudit piston (1).

2. Embiellage suivant la revendication 1, caractérisé en ce que le pied de bielle comporte au-delà de sa zone de moindre épaisseur un élément (4) destiné à sa fixation au piston (1).

3. Embiellage suivant la revendication 1, caractérisé en ce que la bielle (3) comporte des moyens (6) de réduire élastiquement son épaisseur au niveau de sa tête, tandis que ses faces latérales (3b, 3c) sont pourvues de deux bossages opposés (7), de manière qu'on puisse engager ceux-ci élastiquement entre deux joues (10, 11) limitant la partie concave (12) du levier d'actionnement (8), lesdits bossages pénétrant dans des ouvertures (10a, 11a) ménagées dans lesdites joues (10, 11) lorsqu'on libère la bielle (3).

4. Embiellage suivant la revendication 3, caractérisé en ce que les bossages (7) ne portent pas contre le fond (10b, 11b) des ouvertures (10a, 11a) des joues (10, 11) lorsque la tête de bielle (3a) est en appui contre la partie complémentaire concave (12) du levier (8).

5. Embiellage suivant la revendication 1, caractérisé en ce que la partie concave (12) du levier (8) est pourvue de lumières (15) permettant l'évacuation de tout corps étranger pouvant se trouver entre elle et la bielle (3).

*Fig. 1*

*Fig. 2*

*Fig. 3*

0254650

Fig. 4

Fig. 5

Office européen
des brevets

RAPPORT DE RECHERCHE EUROPEENNE

Numéro de la demande

EP 87 42 0176

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 330 902 (HEPWORTH) <br> * Page 1, lignes 46-90; figures 1,2 * | 1,2 | F 16 J 1/14 <br> F 16 C 11/04 <br> F 04 B 9/14 |
| Y | US-A-4 523 557 (FOX) <br> * Colonne 3, lignes 19-51; figure 5 * | 1,3 | |
| A | EP-A-0 018 475 (MESSERSCHMITT) <br> * En entier * | 1,2 | |
| A | GB-A- 11 782 (HILL) (A.D. 1909) <br> * En entier * | 3 | |
| A | DE-A-1 532 860 (PRAEZISOLA) <br> * En entier * | 3 | DOMAINES TECHNIQUES RECHERCHES (Int. Cl.4) <br> F 16 J <br> F 16 C <br> F 04 B |

Le présent rapport de recherche a été établi pour toutes les revendications

| Lieu de la recherche | Date d'achèvement de la recherche | Examinateur |
|---|---|---|
| LA HAYE | 28-10-1987 | LEGER M.G.M. |